**Europäisches Patentamt**

**European Patent Office**

**Office européen des brevets**

(11) Veröffentlichungsnummer: **0 032 573**
**B1**

(12) **EUROPÄISCHE PATENTSCHRIFT**

(45) Veröffentlichungstag der Patentschrift:
**12.10.83**

(21) Anmeldenummer: **80108081.3**

(22) Anmeldetag: **20.12.80**

(51) Int. Cl.³: **G 01 P 13/02, B 63 B 49/00**

(54) Windrichtungsanzeiger.

(30) Priorität: **11.01.80 DE 3000894**
**14.10.80 DE 8027377 U**

(43) Veröffentlichungstag der Anmeldung:
**29.07.81 Patentblatt 81/30**

(45) Bekanntmachung des Hinweises auf die Patenterteilung:
**12.10.83 Patentblatt 83/41**

(84) Benannte Vertragsstaaten:
**AT CH DE FR GB IT LI NL SE**

(56) Entgegenhaltungen:
**EP-A-0 013 059**
**CH-A-613 282**
**GB-A-1 180 700**
**US-A-2 681 569**
**US-A-3 845 734**

(73) Patentinhaber: **Pfeiffer Gerätebau GmbH,**
**Josef-Bosch-Strasse 4, D-7760 Radolfzell (DE)**

(72) Erfinder: **Kuhlmann, Werner, Westerndorferstrasse 48,**
**D-8201 Stephanskirchen (DE)**
Erfinder: **Redlinger, Werner, Grosswiesenstrasse 16,**
**D-7763 Öhningen (DE)**

(74) Vertreter: **Patentanwälte Ruff und Beier,**
**Neckarstrasse 50, D-7000 Stuttgart 1 (DE)**

Windrichtungsanzeiger

Die Erfindung bezieht sich auf einen Windrichtungsanzeiger für Segelfahrzeuge, bei denen das Segel zu seiner Halterung den Mast umgibt und gegenüber diesem drehbar ist. Üblicherweise sind auf Windsurfern oder anderen Segelfahrzeugen mit den Mast umgebenden Segel Windrichtungsanzeiger nur am Masttop anzubringen, stören dort aber, wenn das Segel über den Mast gezogen wird.

Sie haben auch den Nachteil, dass sie vom Steuermann nur schlecht abzulesen sind, weil er dabei seinen Blick ganz nach oben richten muss. Bei Windsurfern und schnellen Jollen ist jedoch alle Aufmerksamkeit auf das Segel, das Boot und dessen Bedienung zu richten. Aus diesen Gründen und der Beschädigungsgefahr ist bisher auch noch kein brauchbarer Windrichtungsanzeiger für Windsurfer und ähnliche Boote entwickelt worden.

Die US-A-3 845 734 beschreibt einen Windrichtungsanzeiger, der mit einem Spanngurt an der Luv-Spiere bzw. Rah eines Lugger- oder Lateinersegels angebracht ist an dem das Segel durch eine Reihleine o.dgl. angebracht ist. Hierbei dreht sich zwar die Spiere mit dem Segel, so dass auch der Windrichtungsanzeiger mitgeschwenkt wird. Diese Lösung schafft aber eine gegenüber der Spiere nicht schwenkbare Ausführung und ist bei den o.g., den Mast umgreifenden Segeln nicht brauchbar.

Aus der US-A-2 681 589 ist ein Windrichtungsanzeiger bekannt geworden, dessen Ausleger mit einer im mittleren Bereich des Mastes angeschraubten Schelle quer zur Schiffslängsrichtung weisend angebracht werden kann. Hier ist er jedoch beim Segeln hinderlich, insbesondere vor dem Wind, wo das Segel den Ausleger verbiegen kann. Für den Mast umschlingenden Segel ist er unbrauchbar.

In der EP-A- 0 013 059 (Stand der Technik nach Art 54(3)(4) EPü) ist vorgeschlagen worden, einen Windrichtungsanzeiger mittels eines den Mast umgreifenden Bügels am Segel in einem Bereich hinter dem Mast zu befestigen. Diese Ausführung ist raumaufwendig und empfindlich und stört beim Segeln auf Vorwind-Kursen.

Aufgabe der Erfindung ist die Schaffung eines Windrichtungs anzeigers für Windsurfer o.dgl., der trotz leichter und gut ablesbarer Anbringung eine brauchbare Windrichtungsanzeige ermöglicht.

Diese Aufgabe wird erfindungsgemäss dadurch gelöst, dass eine Windfahne an einem Ausleger drehbar gelagert ist, der eine Befestigungseinrichtung zur Anbringung am Segel im den Mast umgebenden Bereich aufweist und dass die Befestigungseinrichtung sich derart über das Segel am Mast abstützt, dass der Ausleger der Drehung des Segels folgt.

Dieser Windrichtungsanzeiger liegt also ständig im natürlichen Blickwinkel des Steuermanns oder Surfers und dreht sich mit dem Segel stets in diese Stellung, die jeweils entlang der Segelfläche gesehen, vor dem Mast liegt. Dort ist die Strömung weitgehend noch ungestört. Die Anbringung im mittleren Bereich des Mastes bedeutet also, dass der Windrichtungsanzeiger in einem Bereich zwischen Mastfuss und Masttop liegt, der normalerweise vom Segel eingenommen wird. Obwohl der Ausleger am Segel angeordnet ist, so dass er sich mit dem Segel immer so drehen kann, dass er auf den meisten Kursen unmittelbar vor der Windanschnittkante des Segels steht, ist er ausreichend fest anzubringen, weil er sich durch das Segel hindurch am Mast abstützen kann.

Die Befestigungseinrichtung kann als Federklemmvorrichtung ausgebildet sein, die über das den Mast umgebende Segel greift, oder bei einer anderen Ausführungsform kann der Ausleger beispielsweise eine Vorrichtung zum Einstecken in eine am Segel angebrachte Tasche haben. Dabei ist der Ausleger ganz besonders leicht zusammen mit dem Segel drehbar, und seine Anbringung ist sehr unkompliziert. Auch hier übertragen sich aber auf den Ausleger einwirkende Kräfte durch Abstützung auf den Mast. Die Anordnung des Windrichtungsanzeigers im Blickfeld des Seglers ermöglicht es, an dem Ausleger eine Halterung zur Anbringung eines Kompasses vorzusehen. Windsurfer und kleine Jollen, bei denen diese Art von um den Mast herumgreifenden Segeln am häufigsten ist, halten sich zwar normalerweise im unmittelbaren Küstenbereich auf, es kann jedoch sehr leicht vorkommen, dass bei unsichtigem Wetter schon bei geringem Abstand zur Küste die Landsicht verloren geht. Wenn dazu noch Strömungen und drehende Winde kommen, so kann selbst dem erfahrenen Segler leicht die Orientierung verloren gehen. Die Anbringung an dem Ausleger ist deswegen ideal, weil sie die Ablesung ohne weiteres ermöglicht, obwohl sonst am Surfbrett oder auf kleinen Jollen kaum die Möglichkeit besteht, einen Kompass anzubringen und der Segler normalerweise weder die Aufbewahrungsmöglichkeit noch die Bedienungsmöglichkeit für einen Handkompass hat.

Weitere Vorteile und Merkmale gehen aus den Unteransprüchen und der Beschreibung im Zusammenhang mit den Zeichnungen hervor. In der Zeichnung sind Ausführungsbeispiele der Erfindung dargestellt und werden im folgenden näher erläutert. Es zeigen:

Fig. 1 eine Seitenansicht eines ersten Ausführungsbeispiels der Erfindung,

Fig. 2 eine teilgeschnittene Draufsicht nach der Linie II-II in Fig. 1,

Fig. 3 eine Seitenansicht eines zweiten Ausführungsbeispiels und

Fig. 4 einen Schnitt durch ein drittes Ausführungsbeispiel.

## 1. Ausführungsbeispiel

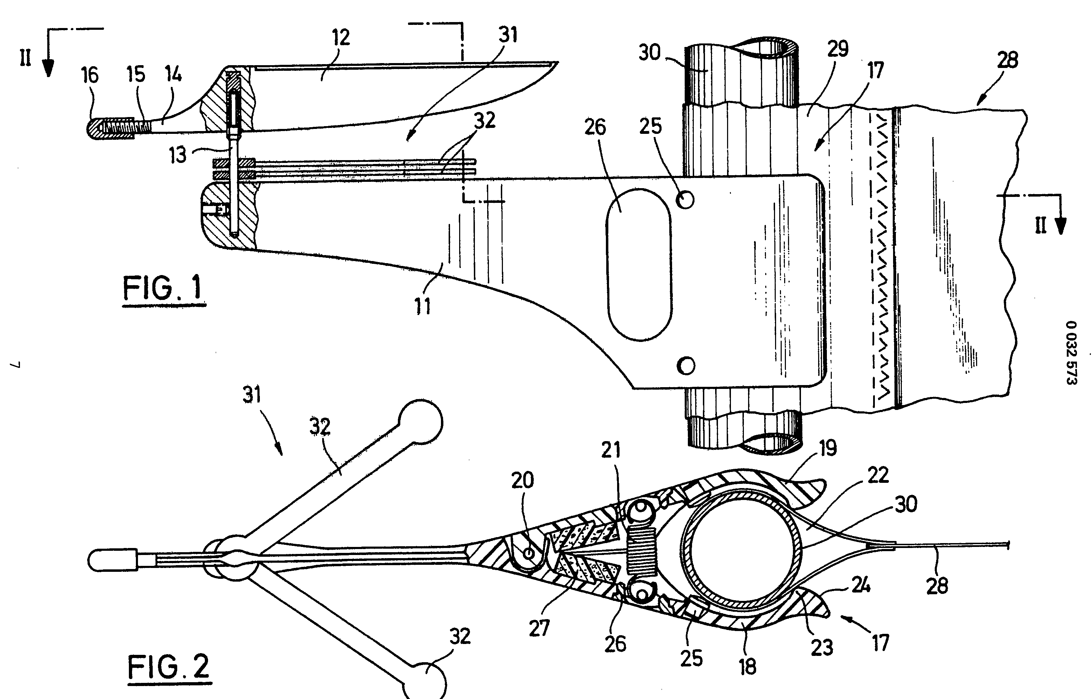

Das in den Figuren 1 und 2 dargestellte 1. Ausführungsbeispiel eines Windrichtungsanzeigers besteht im wesentlichen aus einem Ausleger 11 aus Kunststoff und einer ebenfalls aus Kunststoff bestehenden Windfahne 12, deren nicht drehbarer Befestigungsstift 13 am freien Ende des Auslegers in einer vertikalen Bohrung durch eine Madenschraube festgespannt werden kann. Das obere Ende des Stiftes 13 greift in ein Drehlager ein, das in dem im übrigen einstückig aus Kunststoff hergestellten Windfahnenkörper fest angebracht ist. Das entgegen der Windrichtung weisende vorstehende Ende 14 der Windfahne hat die Form eines Kunststoffbolzens mit einem Gewinde 15, auf das ein metallisches Gegengewicht in Form einer Hutmutter 16 aufschraubbar ist.

Der Ausleger 11 erweitert sich von seinem relativ schmalen freien Ende zu seiner Anbringungseinrichtung 17, die im vorliegenden Falle eine Federklemmvorrichtung ist. Dementsprechend besitzt der Ausleger zwei Backen 18, 19, die zusammen eine tulpenförmige Ausbildung ergeben, die einen Mast zwischen sich einklemmen kann. Der eine Backen 18 ist einstückig mit dem übrigen Ausleger verbunden, während der Backen 19 über ein scharnierartiges Gelenk 20 mit einem Lagerstift an dem Ausleger angelenkt ist. Die beiden Backen werden durch zwei Schrauben-Zugfedern 21 gegeneinander gepresst, die zwischen Gelenk 20 und dem Klemm-Maul 22 zwischen den beiden Backen angeordnet sind. Die Backen umgreifen einen Mast, abhängig von dessen Stärke, um etwa 270°. Die in Figur 2 gezeigte Stellung ist diejenige des dünnsten Mastes, der in dem Klemm-Maul noch festgeklemmt wird. Bei dickeren Masten ist das Klemm-Maul 22 weiter geöffnet. Die Auflage der beiden Backen wird durch vertikal verlaufende Rippen 23 am Ausgang des Klemm-Mauls gebildet, an die sich eine trichterförmige Einlauf-Abschrägung 24 anschliesst die ein leichtes Aufschieben auf den Mast ermöglicht. In Bezug auf den dargestellten Mast um ca. 90° gegenüber den Rippen 23 versetzt sind jeweils vertikal übereinander zwei Andrückpuffer 25 an jedem Backen 18, 19 vorgesehen, die aus in Bohrungen an den Backen eingesetzten Gummipuffern bestehen.

An beiden Backen sind in entsprechend ausgeformte Ausnehmungen Einsätze 26 eingefügt und durch Einpressen bzw. Einschnappen befestigt, die ebenfalls aus Kunststoff bestehen, jedoch eine andere Farbe haben als der Ausleger 11 und auch untereinander verschiedene Farben haben. So kann beispielsweise der linke Einsatz 26 rot und der rechte grün sein. Der Segler kann daraus nicht nur die auf dem Wasser üblichen Farben der beiden Fahrzeugseiten entnehmen, sondern auch unmittelbaren Aufschluss über seine Ausweichpflicht entnehmen, da er gegenüber einem auf dem anderen Bug segelnden Fahrzeug dann ausweichpflichtig ist, wenn er auf dem Steuerbord-Bug segelt, wobei er vor sich den roten (Backbord) Einsatz sieht. Auf dem anderen Bug ist es umgekehrt, so dass er, wenn er dem auf dem anderen Bug segelnden Fahrzeug nicht ausweichpflichtig ist, den grünen Einsatz vor sich hat.

In dem sich zwischen beiden Backen im Bereich des Gelenks 20 bildenden Raum sind zwei Schaumstoffeinsätze 27 angebracht, die dafür sorgen, dass der Windrichtungsanzeiger mit Sicherheit schwimmt. Man kann dies natürlich auch durch die Wahl eines entsprechenden Kunststoffes erreichen, hat jedoch dadurch die grössere Freiheit in bezug auf die Materialwahl.

Der Windrichtungsanzeiger wird, wie insbesondere aus Fig. 2 zu erkennen ist, über das Segel 28 geschoben, das mit einer Mast-Tasche 29 den Mast 30 umgibt. Wegen der Einlaufschräge 24 und der tulpenförmigen Ausbildung des Klemm-Mauls ist es normalerweise nur nötig, den Ausleger kräftig aufzudrücken, bis er auf dem Mast einschnappt. Die Zugfedern 21 sorgen für eine kräftige Klemmwirkung mit auch bei unterschiedlichen Mastdurchmessern relativ konstanterklemmkraft. Durch den guten halt infolge der Ausbildung der Rippen 23 mit einer Riffelung oder Aufrauhung sowie der aus rutschhemmendem Material (Gummi) bestehenden Puffer 25 ist die Haltewirkung der Anbringungseinrichtung 17 auf der Aussenfläche des Segels sehr gut, während das Segel auf dem glatten Mast 30 leichter rutschen kann. So ist sichergestellt, dass sich auch bei nicht mitdrehenden Mast der Ausleger mit dem Segel dreht und dieses nicht punktweise festhält.

Die Anbringung des Windrichtungsanzeigers sollte normalerweise etwas über Kopfhöhe des Seglers erfolgen, was etwa der halben Masthöhe entspricht, d.h. in etwa 2 bis etwa 2,30 m vom unteren Mastende.

Am vorderen Ende des Auslegers, wo die Windfahne in etwa 10 bis 20 cm Abstand zum Mast drehbar gelagert ist, kann eine Anzeigevorrichtung 31 vorgesehen sein, die beispielsweise zwei Arme 32 aufweist, die normalerweise unter einem Winkel von ca. 45° vom Ausleger hinwegweisen. Sie dienen dazu, dem Surfer anzuzeigen, ob er beim Kreuzen den optimalen Winkel zum scheinbaren Wind einhält. Diese Anzeigevorrichtung kann, wie im dargestellten Beispiel, zwei auf die Achse 13 geklemmte einstellbare Arme 32 besitzen, kann jedoch auch aus einer festen Kunststoffplatte mit den beiden Armen bestehen, die auf das Ende des Auslegers geklemmt oder dort anderweitig befestigt ist.

Die Anzeige wird vom Surfer durch In-Dekkungs-Bringen der Windfahne mit den Armen 32 abgelesen.

## 2. Ausführungsbeispiel

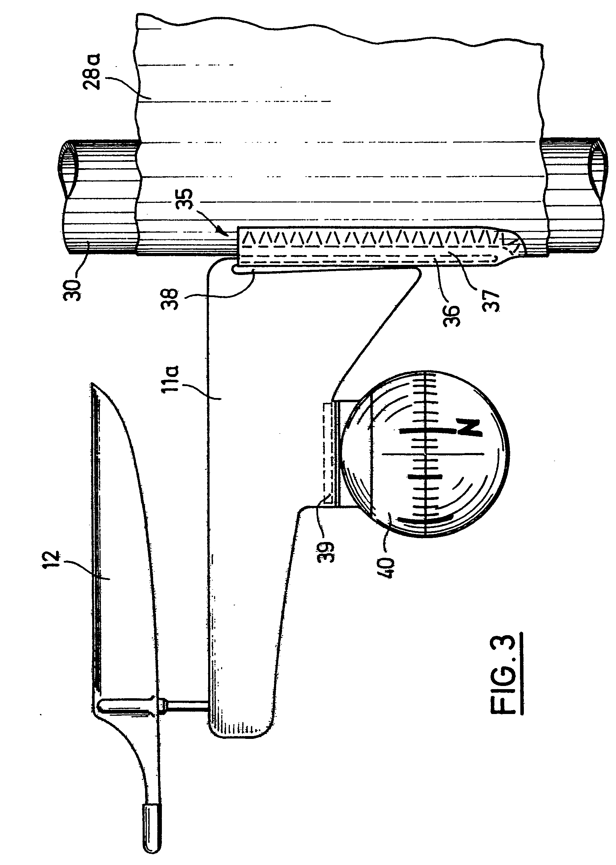

Die zweite Ausführungsform nach Fig. 3 stimmt in bezug auf die Windfahne mit der ersten Ausführungsform überein. Der Ausleger besitzt jedoch an seinem dem Mast 30 zugewandten Ende statt der Klemmvorrichtung eine Einsteckvorrichtung 35, die aus einem langgestreckten vertikalen, an dem Ausleger 11a angeformten Teil 36 besteht, das in eine an der Mastvorderkante auf das Segel genähte Tasche 37 von oben her eingesteckt werden kann. Dabei ist zwischen dem Teil 36 und dem Körper des Auslegers 11a ein Spalt 38 gebildet, der durch Klemmwirkung unter Eigenfederung den Stoff der Mast-Tasche 37 zwischen sich einklemmen und somit den Ausleger zusätzlich sichern kann. Es sind auch andere Arten von Sicherungen denkbar, beispielsweise durch eine in der Mast-Tasche vorgesehene Kausch, in die ein Vorsprung im Bereich des Spaltes 38 eingreift o.dgl.

An der Unterseite des Auslegers ist eine Halterung 39 für einen Kompass 40 vorgesehen. Die Halterung kann ähnlich ausgebildet sein wie ein Geräteschuh beim Fotoapparat, d.h. eine schwalbenschwanzartige Führung haben, in die der Kompass eingesteckt und ggf. durch eine Sicherungsrast gesichert werden kann. Der Kompass 40 kann vorzugsweise ein Kugelkompass sein, der unter dem Ausleger hängt und somit gut ablesbar ist, ohne die Windfahne 12 zu behindern. Es reicht normalerweise ein sehr einfacher Kompass aus, da bei einem Kugelkompass keine Kardanik notwendig ist und an einem Windsurfer normalerweise keine ferromagnetischen oder permanent-magnetischen Teile vorhanden sind, die eine Deviation hervorrufen könnten. Es reicht also ein sehr einfacher, nicht kompensierbarer Kompass aus, um eine ausreichende Anzeige zu erhalten.

### 3. Ausführungsbeispiel

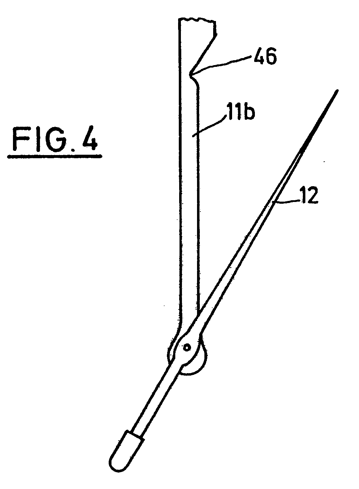

In Fig. 4 ist der Ausleger 11b eines Windrichtungsanzeigers teilweise dargestellt, bei dem nahe am Mast eine Soll-Knickstelle 46 in Form einer vertikalen Nut im Ausleger vorgesehen ist. Sie dient dazu, einen unglücklich auf den Mast fallenden Surfer vor einer Verletzung durch den Ausleger zu schützen, obwohl wegen der Klemmvorrichtung Verletzungen ohnehin kaum zu befürchten sind. Die Soll-Knickstelle kann durch entsprechende Wahl des Kunststoffes so eingerichtet sein, dass sie ein nur vorübergehendes Abknicken ohne Bruch ermöglicht.

### Patentansprüche:

1. Windrichtungsanzeiger für Segelfahrzeuge, bei denen das Segel zu seiner Halterung den Mast (30) umgibt und gegenüber diesem drehbar ist, dadurch gekennzeichnet, dass eine Windfahne (12) an einem Ausleger (11, 11a) drehbar gelagert ist, der eine Befestigungseinrichtung (17,35) zur Anbringung am Segel (28) im den Mast (30) umgebenden Bereich aufweist und dass die Befestigungseinrichtung (17, 35) sich derart über das Segel (28) am Mast (30) abstützt, dass der Ausleger (11, 11a) der Drehung des Segels (28) folgt.

2. Windrichtungsanzeiger nach Anspruch 1 für Windsurfer, dadurch gekennzeichnet, dass die Windfahne (12) im Blickwinkel einer auf dem Surfbrett stehenden Person, vorzugsweise in etwa 1,80 bis 2,50 m Höhe angeordnet ist.

3. Windrichtungsanzeiger nach Anspruch 1 oder 2, dadurch gekennzeichnet, dass der Ausleger (11b) in der Nähe der Befestigungseinrichtung eine Sollknickstelle (46) hat.

4. Windrichtungsanzeiger nach einem der vorhergehenden Ansprüche, dadurch gekennzeichnet, dass der Ausleger (11, 11a) als Befestigungseinrichtung eine Feder-Klemmvorrichtung (17) aufweist.

5. Windrichtungsanzeiger nach Anspruch 4, dadurch gekennzeichnet, dass die Feder-Klemmvorrichtung (17) zwei gelenkig zueinander gelagerte und durch Federn (21), vorzugsweise Schrauben-Zugfedern, aufeinanderzubelastete, vorteilhaft mit Andruckpuffern (25) an ihrer Innenseite versehene Backen (18, 19) aufweist.

6. Windrichtungsanzeiger nach einem der Ansprüche 1 bis 4, dadurch gekennzeichnet, dass der Ausleger (11a) als Befestigungseinrichtung eine Vorrichtung (35) zum Einstecken in eine am Segel (28a) angebrachte Tasche (37) hat.

7. Windrichtungsanzeiger nach einem der vorhergehenden Ansprüche, dadurch gekennzeichnet, dass der Ausleger (11a) eine Halterung (39) zur Anbringung eines Kompasses (40) aufweist.

8. Windrichtungsanzeiger nach einem der vorhergehenden Ansprüche, dadurch gekennzeichnet, dass der Ausleger (11) an seinen beiden Seiten verschiedenfarbige Einsätze (26) aufweist.

9. Windrichtungsanzeiger nach einem der vorhergehenden Ansprüche, dadurch gekennzeichnet, dass eine Anzeigevorrichtung (31) für bevorzugte Windeinfallsrichtungen, vorzugsweise in Form von ggf. einstellbaren Armen (32) vorgesehen ist.

10. Windrichtungsanzeiger nach einem der vorhergehenden Ansprüche, dadurch gekennzeichnet, dass der Ausleger (11), vorzugsweise innen im Bereich zwischen der Backenlagerung (20) und der für das Umgreifen des Mastes (30) vorgesehenen Ausnehmung (22) eine Schwimmkörpereinlage (27) aufweist.

11. Windrichtungsanzeiger nach einem der vorhergehenden Ansprüche, dadurch gekennzeichnet, dass die Windfahne (12) aus Kunststoff besteht und an ihrem über ihre Achse (13) entgegen der Windrichtung vorragenden Abschnitt (14) ein Gewinde (15) zum Aufschrauben eines metallischen Gegengewichts (16) aufweist.

### Claims:

1. Wind direction indicator for sailing craft, in which the sail surrounds the mast (30) for support purposes and is rotatable with respect to the latter, characterized in that a vane (12) is mounted in rotary manner on a boom (11, 11a), which has a fixing device (17, 35) for fitting to the sail (28) in the area surrounding mast (30), and that the fixing device (17, 35) is supported on mast (30) via sail (28) in such a way that the boom (11, 11a) follows the rotation of sail (28).

2. Wind direction indicator according to claim 1 for wind-surfers, characterized in that, in the viewing angle of a person standing on the surfboard, vane (12) is preferably arranged at a height of approximately 1.80 to 2.50 m.

3. Wind direction indicator according to claim 1 or 2, characterized in that in the vicinity of the fixing device boom (11b) has an ideal bending point (46).

4. Wind direction indicator according to one of the preceding claims, characterized in that the

boom (11, 11a) has a spring clip means (17) as the fixing device.

5. Wind direction indicator according to claim 4, characterized in that the spring clip means (17) has two jaws (18, 19) mounted in articulated manner with respect to one another, loaded towards one another by springs (21), preferably spiral tension springs, and which are advantageously provided on their inside with pressure pads (25).

6. Wind direction indicator according to one of the claims 1 to 4, characterized in that, as the fixing device boom (11a) has a device (35) for fitting into a pocket (37) attached to sail (28a).

7. Wind direction indicator according to one of the preceding claims, characterized in that the boom (11a) has a mounting support (39) for the attachment of a compass (40).

8. Wind direction indicator according to one of the preceding claims, characterized in that at either end boom (11) has differently coloured inserts (26).

9. Wind direction indicator according to one of the preceding claims, characterized in that there is an indicating means (31) for preferred incident wind directions, preferably in the form of optionally adjustable arms (32).

10. Wind direction indicator according to one of the preceding claims, characterized in that, preferably internally in the area between the jaw mounting support (20) and the recess (22) for embracing mast (30), boom (11) has a float insert (27).

11. Wind direction indicator according to one of the preceding claims, characterized in that the vane (12) is made from plastic and has, on its portion (14) projecting over its spindle (13) counter to the wind direction, a thread (15) for screwing on a metal counterweight (16).


**Revendications:**

1. Indicateur de direction du vent pour embarcations à voile, dans lesquelles la voile entoure le mât (30) par sa monture et peut être éventuellement tournée par rapport au mât, caractérisé en ce qu'un anémoscope (12) est monté de façon rotative sur une flèche (11, 11a), qui comprend un dispositif de fixation (17, 35) destiné au montage sur la voile (28) dans la zone entourant le mât (30), et en ce que le dispositif de fixation (17, 35) s'appuie sur le mât (30) et par-dessus la voile (28) de manière que la flèche (11, 11a) suive la rotation de la voile (28).

2. Indicateur de direction du vent selon la revendication 1 pour planche à voile, caractérisé en ce que l'anémoscope (12) est disposé dans l'angle visuel d'une personne se tenant sur la planche à voile, et de préférence à une hauteur comprise entre environ 1,80 et 2,50 m.

3. Indicateur de direction du vent selon l'une des revendicatitons 1 ou 2, caractérisé en ce que la flèche (11b) comprend à proximité du dispositif de fixation une position d'enclenchement de consigne (46).

4. Indicateur de direction du vent selon l'une quelconque des revendications précédentes, caractérisé en ce que la flèche (11, 11a) comprend en tant que dispositif de fixation un dispositif de serrage élastique (17).

5. Indicateur de direction du vent selon la revendication 4, caractérisé en ce que le dispositif de serrage élastique (17) comprend deux mors (18, 19), montés de façon articulée l'un par rapport à l'autre, qui sont sollicités l'un vers l'autre par des ressorts (21), de préférence des ressorts de traction hélicoïdaux, et qui sont munis avantageusement de tampons de serrage (25) sur leur côté interne.

6. Indicateur de direction du vent selon l'une quelconque des revendications 1 à 4, caractérisé en ce que la flèche (11a) comprend en tant que dispositif de fixation un dispositif (35) destiné à être enfoncé dans une poche (37) montée sur la voile (28a).

7. Indicateur de direction du vent selon l'une quelconque des revendications précédentes, caractérisé en ce que la flèche (11a) comprend une monture (39) pour la fixation d'une boussole marine (40).

8. Indicateur de direction du vent selon l'une quelconque des revendications précédentes, caractérisé en ce que la flèche (11) comprend sur ses deux côtés des inserts (26) de couleurs différentes.

9. Indicateur de direction du vent selon l'une quelconque des revendications précédentes, caractérisé en ce qu'il est prévu un dispositif indicateur (31) pour les directions d'incidence préférentielles du vent, de préférence sous forme de bras (32) éventuellement réglables.

10. Indicateur de direction du vent selon l'une quelconque des revendications précédentes, caractérisé en ce que la flèche (11) comprend de préférence un corps flottant interne (27) dans la zone comprise entre la monture (20) des mors et l'évidement (22) prévu pour entourer le mât (30).

11. Indicateur de direction du vent selon l'une quelconque des revendications précédentes, caractérisé en ce que l'anémoscope (12) est en matière plastique et comprend, dans sa section (14) qui est saillie contre la direction du vent au-delà de son axe (13), un filetage (15) destiné au vissage d'un contrepoids métallique (16).

FIG. 1

FIG. 2

7

FIG.3

0 032 573

FIG.4